# EUROPEAN PATENT APPLICATION

(11) **EP 3 960 392 A1**
(43) Date of publication of application: **02.03.2022**
(21) Application number: 20192460.2
(22) Date of filing: 24.08.2020
(51) Int. Cl.: B25J 9/16

(54) **METHOD AND SYSTEM FOR ROBOTIC PROGRAMMING**

(71) Applicant: ABB Schweiz AG, 5400 Baden (CH)
(72) Inventor: DAN, Andrei, 8057 Zürich (CH); VERSCHUEREN, Robin, 8003 Zürich (CH); LOCHER, Thomas, 8050 Zürich (CH); BIRKE, Robert, 8802 Kilchberg (CH); GIANNOPOULOU, Georgia, 8049 Zürich (CH); BORRELLI, Elsi-Mari, 5430 Wettingen (CH); SOMMER, Philipp, 8003 Zürich (CH); SCHOENBORN, Sandro, 4059 Basel (CH)
(74) Representative: Zimmermann & Partner Patentanwälte mbB

(57) **Abstract**

A method and system are provided for programming robots by operators without expertise in specialized robot programming languages. In the method, inputs are received from the operator generically describing a desired robot movement. The system then uses the operator inputs to translate the desired robot movement into software commands that direct the robot to perform the desired robot movement. The robot may then be programmed with the software commands and operated to perform the desired robot movement.

## Description

### BACKGROUND

The present inventions relate generally to robots, and more particularly, to programming robots.

In order to configure a robot for a specific task, expert robot engineers are typically required to program it with dedicated languages and operating systems. For example, robots are currently programmed using special-purpose languages (e.g., ABB's RAPID language), which requires in-depth knowledge of the robot's technical capabilities (number of joints, degrees of freedom, range, coordinate systems, etc.). The engineer must also have sufficient knowledge of the dedicated language used for programming the robot. To build a robot application, it is necessary for the engineer to understand the capabilities and limitations of the specific target robot. This in turn requires an in-depth knowledge of the hardware implementation and mechanical properties of the robot. Further, when a robot is not able to perform a given task (e.g., due to kinematic limitations), numbered error codes are generated which are understandable only by expert users. Understanding such messages in order to be able to resolve an underlying problem can be difficult for non-experts. Conventional robots typically do not offer an interface for intuitive user instructions that allow clear feedback from the robot in case of errors or infeasible instructions. This makes it difficult for humans to understand how far a robot can reach and what its limitations are in terms of feasible movements. As a result, robot programming is considered a challenging task requiring software development and mechanical engineering skills, as well as specialized training.

Employing specialized engineers is costly for high-mix, low-volume enterprises where robots need to be reconfigured on a regular basis (e.g., every few minutes or hours in workshops, medical labs, restaurants, etc. where collaborative robots are employed for tasks with low batch sizes). The cost and delay associated with conventional robot programming may quickly become prohibitive where robots need to be frequently reprogrammed, which is typical, e.g., for collaborative robots. Such robots can be used in small workspaces, medical labs, personalized gift industries, restaurant kitchens, etc. where reconfiguration of the robot may be necessary multiple times per day. As robots (especially collaborative robots) gain quick adoption in many application domains, it is essential to ensure that programming robots to perform various tasks is intuitive and accessible to a wide range of users, not only to robotics experts. Thus, reducing costs and simplifying reconfiguration of robots would provide future automation applications, e.g., with collaborative robots in small workshops.

### SUMMARY

A method and system are described for programming robots. In order to program the robot, specialized software commands are needed. However, the operator may not have expertise with the specialized software commands used to program a robot. Thus, the system enables the operator to provide generic inputs describing the desired robot movement without needing to specify actual software commands. The system translates the operator inputs into software commands that direct the robot to perform the desired robot movement. The robot may then be programmed and operated using the translated software commands to perform the desired robot movement. The invention may also include any other aspect described below in the written description or in the attached drawings and any combinations thereof.

The system may be configured for programming the robot by the operator using any method described herein. The system may comprise an operator communication module configured for receiving the operator input; an environmental sensor module configured for capturing identification and/or location information; an actuation module configured for translating the operator input into the software commands; and possibly a controller module configured for coordinating. Also, a use of the system for programming the robot using any method described herein is provided.

### BRIEF DESCRIPTION OF SEVERAL VIEWS OF THE DRAWINGS

The invention may be more fully understood by reading the following description in conjunction with the drawings, in which:
Figure 1 is a schematic of a system for an operator to program a robot;
Figure 2 is a schematic illustrating an example of programming a robot using the system; and
Figure 3 is a flow chart of a method for an operator to program a robot.

### DETAILED DESCRIPTION

A new method and system are provided herein for enabling intuitive programming of robots. The method and system enables non-experts to co-create automation tasks with robots based on an intuitive programming method through natural interaction via multiple channels. Speech input/output, recognition of objects and hand gestures, and a graphical user interface guide users through the co-creation of robotic tasks and help them handle potential errors. Additional communications channels that may be used include augmented/mixed reality to overlay planned trajectories before execution, haptic gloves to provide tactile feedback and/or provide a direct sensation of kinetic limits, and thermal sensors for (scaled) temperature feedback. The fusion of multiple communication channels makes the interaction intuitive and natural, e.g., the operator can instruct the robot by either speech input or clicking a button on a touch screen. This way, robot programming becomes accessible to ordinary operators and the initial setup and reconfiguration of the robot's functionality can be completed within a short time. Thus, productivity may be increased and commissioning costs of robots may be decreased. In turn, this may open new market segments for collaborative robots in application areas where frequent robot reconfiguration is required.

The described method and system enables non-expert users to teach a robot a task by means of several input modalities (e.g., speech, vision, sensors, touch, showing a movement by lead-through, etc.) and provide immediate feedback in a user-friendly and understandable way (e.g., speech, display, acoustic signals, etc.). It is understood herein that references to an operator of the robot refers to a non-expert user with minimal or no programming skills using software commands of special-purpose robot programming languages. By using a modular design, an advantage of the system is its compatibility in the form of add-on packages with several communication channels as well as a wide range of robots.

A first step of the interaction involves the operator instructing the robot to perform a sequence of operations by providing high level concepts (e.g., pick, move, place) and object names known to humans (e.g., block, pencil, screw, this object here). The instructions may be enhanced with attributes (e.g., red pen, big screw, rotate clockwise, etc.). In a second step, if an instruction is not understood, then the operator is prompted for clarification (e.g., which object?) and several choices may be offered (e.g., by showing the objects that are visible to the robot's camera). The operator is then able to provide feedback to the robot using one of the several input modalities (e.g., speech input, touch screen, hand gesture) so that the intended task can be completed.

The improved robot programming method and system provides a natural interaction between the operator and the robot system which arises from the interplay of the described modules. The resulting interaction between non-expert users and the robot is similar to the way humans teach each other new skills. The interaction leverages multiple in- and output modalities such as speech recognition and synthesis, vision, gesture recognition, touch, lead-through mode (physically guiding the robot arms) and visualization on a display for intuitively teaching rather than programming the robot using software code.

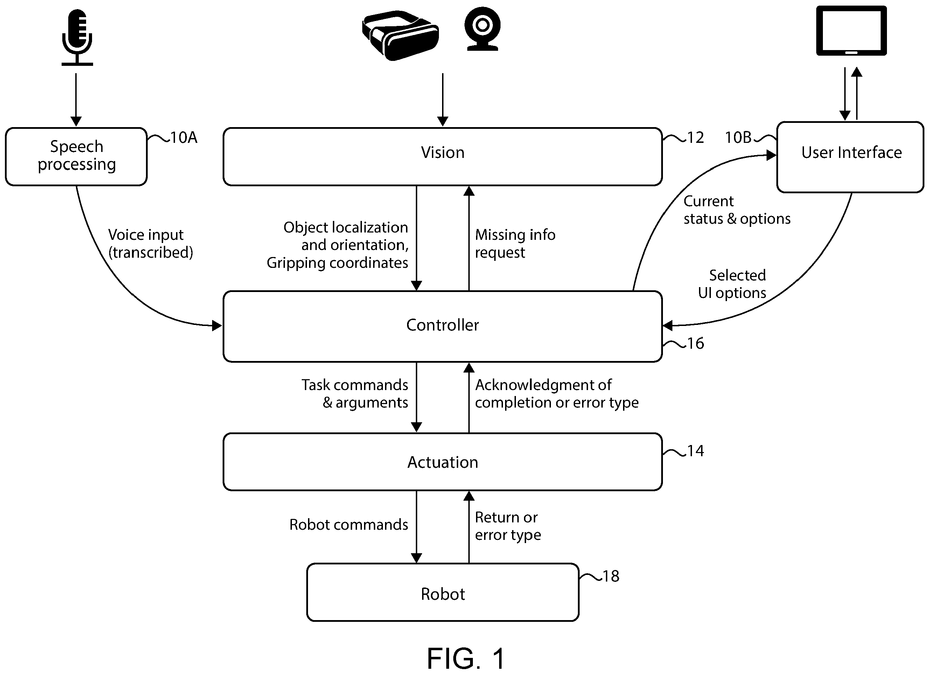

A general architecture for the interactive programming framework is illustrated in Figure 1. The system may include four types of necessary modules: 1) operator communication channels 10, i.e., speech processing 10A and/or a graphical user interface (GUI) 10B in the exemplary architecture; 2) environmental sensors 12 providing awareness of the robot 18 surroundings, e.g., a vision system 12; 3) actuation 14 interfacing with a specific robot 18 control channel, e.g., ABB's RobotWare or ABB's EGM or other similar offerings; and 4) a controller 16 coordinating the previous modules to provide the intuitive and natural interaction for the operator to teach and interact with the robot 18. In the example, the modules 10, 12, 14, 16 may be organized as micro services and communicate via messages over a communication middleware, such as a publish-subscribe service. A micro-service style architecture allows several different modules to be easily integrated together, but other architectures, e.g., monolithic, are also possible.

It is understood that the list of operator communication channels (i.e., inputs to the operator module 10) is not limited to the examples in Figure 1, but depending on the preferred means of operator input and feedback, may include a microphone and speakers for audio, cameras (either stand-alone or integrated into augmented-/virtual reality glasses) for gesture recognition or superposition of robotic tasks in space (without the robot being present or having been programmed), haptic gloves for tactile feedback of manipulation of robotic tasks, monitors for the implementation of user interfaces (UI), touch screens or a tablet for touch selection, etc. Likewise, the environment sensor module 12 may utilize different sensors including a camera for object identification, robotic skin or force sensors for contact, gripping or collision detection, lidar/radar for distance estimation, thermal sensors to identify possible operating hazards or process steps, etc. Each channel and sensor may be handled by a specific module 10, 12.

The actuation module 14 provides an interface towards the robot 18. On the one hand, the actuation module 14 translates task requests into software commands that are understandable by the robot 18. The robot 18 represents an existing robot programming interface, e.g. RobotWare or RAPID, which uses special-purpose robot programming software commands to direct robot movement. On the other hand, the actuation module 14 provides feedback from the robot 18 on the success or failure due to errors of the previously requested task. By changing the interface towards the robot 18 controller, the actuation module 14 may be integrated with robots 18 of different makes and types.

The controller 16 acts as a coordinator between the different modules 10, 12, 14. The controller 16 may be a centralized module 16 or may be distributed across multiple modules 10, 12, 14. The controller module 16 is responsible for fusing together the operator inputs, environment sensors and robot feedback. This fusion process of taking inputs from the operator through the operator module 10, sensors from the environmental sensor module 12, and feedback from the actuation module 14 allows a robot 18 to be taught skills like a human domain expert would teach an apprentice. The set of operator commands that are recognized by the controller module 16 may be called a skill set and may be dynamically extended over the robot's lifetime.

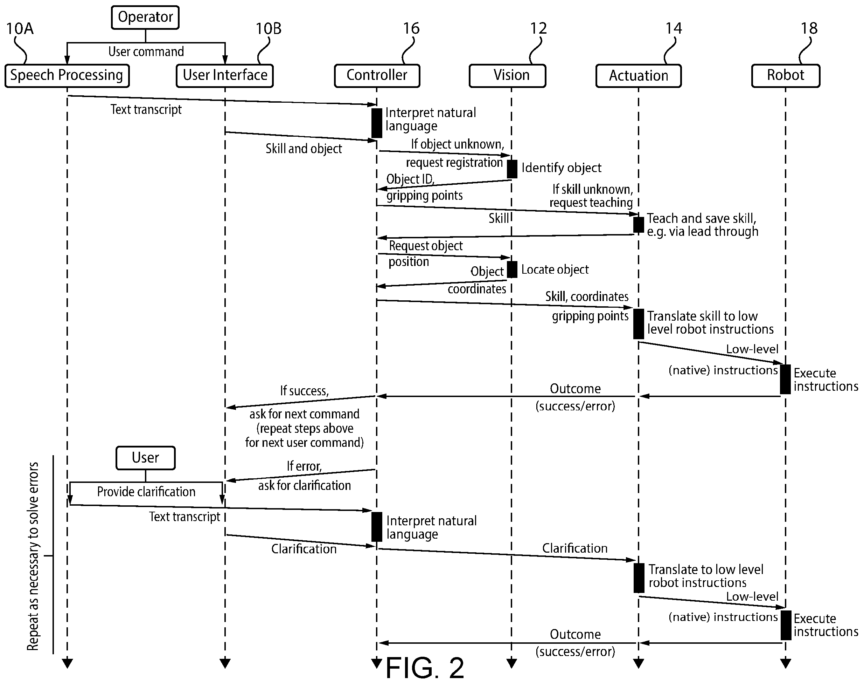

In an example of the method and system, an operator may desire the robot to "pick a tube". The operator may also describe a sequence of robot movements and/or conditions for that robot movement to be executed. For example, the operator may desire the robot to "pick the tube and place it in the red bin" or "after a tube is available in the blue bin, pick it and shake it". The operator may choose to command the system with an operator input either via speech recognition 10A or by employing a graphical user interface 10B. If the skill (i.e., pick) and object (i.e., tube) are known to the controller module 16, the controller module 16 may proceed to request a task (or set of tasks) execution(s) to the actuation module 14 which will translate the tasks into low-level robot software commands for the robot 18 controller. If a command is insufficient, e.g., the action is not understood or any information is missing, e.g. the object is unknown to the system, the controller module 16 may prompt one or more additional operator inputs to provide complementary input. An example interaction between the modules is shown in Figure 2.

Feedback requests and operator input may be provided by any of the operator communication and sensing modules 10, 12 best suited for a natural and intuitive information flow. For example, if the robot 18 does not know a certain movement, the robot 18 may be taught by example using a lead through mode where the operator moves the robot 18 and the robot 18 records the movement. In another example, the operator can register an object with the system by selecting it on an image on the touchscreen 10B. This example also highlights the importance of fusing multiple interaction modalities with the operator and environment. That is, it would be unnatural to identify an object via lead through if it can be easily identified on the touchscreen 10B. Likewise, it typically would require artifacts to teach 3-dimensional movements using a flat 2-dimensional screen.

The controller module 16 registers the additional operator inputs in an appropriate form for future use. For example, movements can be registered as path points and objects as visual fingerprints. Importantly, the format allows learned skills to be transferrable between robots 18. Thus, if a robot 18 is trained with a skill for an application domain, e.g., medical labs, all required information is encoded into the modules of the architecture of Figure 1. The same skill may then be used by other robots 18 of the same or different models having the capabilities required by the skill, e.g., the payload limit preferably matches the weight of the object, two-arm tasks are preferably not executed by single one-arm robots, etc. The actuation module 14, in collaboration with the robot 18 where needed, is responsible for translating the skills into specific software commands and checking and providing feedback on mismatched capabilities.

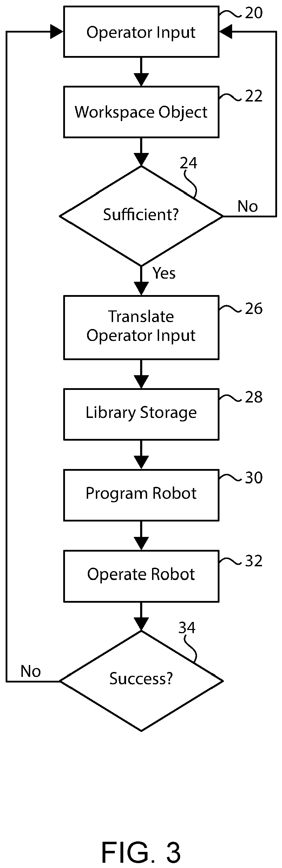

Referring to Figure 3, the method of programming a robot 18 by an operator as described above is summarized. In the method, and operator input which represents a desired robot movement is received (20), for example, from an operator communication module 10. As described above, the operator input may be received as a voice input 10A that is transcribed to text or may be received from a display screen 10B, such as a touchscreen, or any other possible user interface. Information about one or more objects in the workspace of the robot 18, such as identification and/or location information, may also be received from one or more environmental sensors 12, such as a robot vision system 12 (22), or captured by an environmental sensor module 12. The method may then determine whether the operator input is sufficient to translate the operator input into software commands that will direct the robot 10 to perform the desired robot movement (24). If it is determined that the operator input is insufficient, the operator may then be prompted to provide an additional operator input (24, 20).

The operator inputs (and additional operator inputs) are then translated into software commands that will direct the robot 18 to perform the desired robot movement (26), for example, by an actuation module 10. Thus, it is understood that the operator input is not an actual software command, but instead, is a form of common text input, pointer, or other operator input that generically describes the desired robot movement. By contrast, the translated software commands are a form of specialized software code understood by engineers and the robot 18 but not readily used or understood by ordinary operators. It may be desirable to store the operator inputs, additional operator inputs and/or translated software commands in a library storage with data links therebetween so that future operator inputs may be able to be autonomously linked to such additional operator inputs and/or software commands (28). The library storage may be included as part of the actuation module 14 and may be a skill set library that recognizes operator inputs.

Once the operator inputs have been translated into software commands understandable to the robot 18, the robot 18 may be programmed with such software instructions (30). Subsequent to such programming, the robot 18 may be operated using the software commands in order to perform the desired robot movement (32). After the robot 18 has been operated using the software commands, it may be desirable to determine if the robot 18 successfully performed the desired robot movement (34). If it is determined that the robot 18 was unsuccessful, the operator may be prompted for additional operator input (20) and the method may be repeated using the original operator input and the additional operator input (34). A controller module 16 may coordinate between the operator communication module 10, environmental sensor module 12 and/or actuation module 14. Further, the controller module 16 may perform the determinations of whether the operator input is sufficient for translation and/or whether the operated robot movement successfully performed the desired robot movement, and may prompt the operator for additional inputs when needed. It may be desirable for the operator communication module 10, environmental sensor module 12, actuation module 14, and/or controller module 16 to be independent software or hardware modules that operate independently from each other. For example, the modules 10, 12, 14, 16 may be micro services that communicate with each other via messages. Thus, the modules 10, 12, 14, 16 may be implemented in a decentralized fashion.

While preferred embodiments of the inventions have been described, it should be understood that the inventions are not so limited, and modifications may be made without departing from the inventions herein. While each embodiment described herein may refer only to certain features and may not specifically refer to every feature described with respect to other embodiments, it should be recognized that the features described herein are interchangeable unless described otherwise, even where no reference is made to a specific feature. It should also be understood that the advantages described above are not necessarily the only advantages of the inventions, and it is not necessarily expected that all of the described advantages will be achieved with every embodiment of the inventions. The scope of the inventions is defined by the appended claims, and all devices and methods that come within the meaning of the claims, either literally or by equivalence, are intended to be embraced therein.

## Claims

1. A method of programming a robot (18) by an operator, comprising:
receiving an operator input representing a desired robot movement (20);
translating the operator input into software commands directing the robot (18) to perform the desired robot movement (26);
programming the robot (18) with the software commands (30); and
operating the robot (18) using the software commands to perform the desired robot movement (32).

2. The method according to any previous claim, further comprising receiving identification and/or location information of one or more objects within a workspace of the robot (18) from one or more environmental sensors (12) (22).

3. The method according to any previous claim, wherein the one or more environmental sensors (12) comprises a robot vision system (12).

4. The method according to any previous claim, wherein the operator input is transcribed from a voice input (10A).

5. The method according to any previous claim, wherein the operator input is received from a display screen (10B).

6. The method according to any previous claim, wherein the operator input is received from one or more environmental sensors (12).

7. The method according to any previous claim, further comprising determining whether the operator input is sufficient to translate the operator input into the software commands, and prompting the operator to provide an additional operator input if the operator input is determined to be insufficient to translate the operator input into the software commands (24).

8. The method according to any previous claim, further comprising determining whether the software commands successfully direct the robot (18) to perform the desired robot movement after operating the robot (18) using the software commands (34), receiving an additional operator input if the software commands are unsuccessful (20), translating the additional operator input into updated software commands directing the robot (18) to perform the desired robot movement (26), programming the robot (18) with the updated software commands (30), and operating the robot (18) using the updated software commands to perform the desired robot movement (32).

9. The method according to any previous claim, storing the operator input, the additional operator input and a data link between the operator input and the additional operator input, wherein future operator inputs corresponding to the operator input autonomously reference the additional operator input using the data link (28).

10. A system for programming the robot (18) by the operator using the method of any previous claim, comprising:
an operator communication module (10) receiving the operator input;
an environmental sensor module (12) capturing identification and/or location information of one or more objects within a workspace of the robot (18); and
an actuation module (14) translating the operator input into the software commands directing the robot (18) to perform the desired robot movement.

11. The system according to claim 10, wherein the operator communication module (10), the environmental sensor module (12) and the actuation module (14) operate as independent modules in communication with each other.

12. The system according to claims 10-11, further comprising a controller module (16) coordinating between the operator communication module (10), the environmental sensor module (12) and the actuation module (14), the controller module (16) determining whether the operator input is sufficient (24) and/or the software commands are successful (34) and prompting the operator for an additional operator input (20) if the operator input is insufficient and/or the software commands are unsuccessful.

13. The system according to claims 10-12, wherein the controller module operates (16) as an independent module in communication with the operator communication module (10), the environmental sensor module (12) and the actuation module (14).

14. The system according to claims 10-13, wherein the operator communication module (10), the environmental sensor module (12), the actuation module (14) and the controller module (16) are micro services communicating with each other via messages, and/or
wherein the operator communication module (10), the environmental sensor module (12), the actuation module (14) and the controller module (16) are decentralized from each other.

15. The system according to claims 10-14, wherein the actuation module (14) comprises (a) a library (28) of operator inputs and additional operator inputs linked to the operator inputs, and/or (b) a skill set library of recognized operator inputs (28).
